# EUROPEAN PATENT SPECIFICATION

(11) **EP 3 864 770 B1**
(45) Date of publication and mention of the grant of the patent: **23.08.2023**
(21) Application number: 19809537.4
(22) Date of filing: 08.10.2019
(51) Int. Cl.: H04B 7/185, H04B 7/195

(54) **SATELLITE SYSTEMS AND METHODS FOR PROVIDING COMMUNICATIONS**
SATELLITENSYSTEME UND VERFAHREN ZUR BEREITSTELLUNG VON KOMMUNIKATIONEN
SYSTÈMES PAR SATELLITE ET PROCÉDÉS POUR FOURNIR DES COMMUNICATIONS

(30) Priority: 08.10.2018 GB 201816398; 23.08.2019 GB 201912129
(43) Date of publication of application: 18.08.2021
(73) Proprietor: Azuries Space Mission Studios Ltd., London EC1V 2NX (GB)
(72) Inventor: COOKE, Jason, London EC1V 2NX (GB)
(74) Representative: K2 IP Limited
(86) International application number: PCT/GB2019/052855
(87) International publication number: WO 2020/074887

(56) References cited:
- US-B1- 6 198 907
- US-B1- 7 270 299
- PATTERSON D P: "Teledesic: a global broadband network", AEROSPACE CONFERENCE, 1998 IEEE SNOWMASS AT ASPEN, CO, USA 21-28 MARCH 1998, NEW YORK, NY, USA,IEEE, US, vol. 4, 21 March 1998 (1998-03-21), pages 547-552, XP010286901, DOI: 10.1109/AERO.1998.682221 ISBN: 978-0-7803-4311-5

## Description

### FIELD OF THE INVENTION

This invention is directed to systems and methods for providing a communications link for a defined geographic region and for reducing latency and/or providing consistent or predictable latency in a communications network.

### BACKGROUND OF THE INVENTION

Satellite constellations are known to the art. One example is US 6198907B1, which discloses a zero-drift constellation used to simplify the tracking and hand-off requirements of terrestrial-based user terminals. Another example is US 7270299B1, which discloses a method for designing satellite constellations whereby each satellite follows a common ground track, for performing high-precision change detection imagery for long periods of time.

Satellite communications networks are also well known to the art. Typical satellite communications arrangements provide satellites in geo-synchronous orbits, in communication with ground segments on Earth. Such arrangements provide reliable communications over a wide, fixed area, albeit with relatively high latency.

Other satellite constellations are proposed for low earth orbit (LEO). However these require large numbers (tens or hundreds) of satellites to provide communications over the wide areas typically serviced by geo-stationary satellites, and can be aimed at uniform global coverage. Such large constellations may be highly complex operationally and can be expensive to launch and maintain. Moreover, although a single communication link between a ground segment and a satellite of such a constellation can be at relatively low latency, any communication over a distance spanning more than the line of sight of one LEO satellite may require additional processing, inter-satellite communication or on-board processing, or other factors which may increase latency. Constellations providing such global or near global coverage are also typically unable to provide flexible or operationally different types of communications in a given region, or during a given time period; rather these constellations provide a set coverage scheme throughout the operational period. Other previously considered or proposed satellite constellations only provide rudimentary arrangements for variation of the facility of the communications link, and may provide no ability to switch between satellites to efficiently reduce latency. Moreover, these constellations often have no means, or only complex and inefficient means, of providing redundancy for the communications satellites.

Low latency communication networks are in demand from, for example, financial and online gaming users. Communications networks which extend over an appreciable distance can encounter sources of normal latency, such as that which would be expected in a fibre communications link, and additional sources of latency, for example in signal repeating, deteriorating components and the like, or simply from the indirect nature of a route that a cabled link may be obliged to take. Furthermore, certain territories or regions used by or in the path of a communications network or link may introduce other sources of latency; for example, network management processes such as bandwidth throttling or deep packet inspection increase the latency of a communications link.

In addition, certain types of communications networks can suffer from large variations in latency, and also unpredictable variations in latency. This can impede the efficient usage of data being transferred via the communications network or link.

The present invention aims to address these problems and provide improvements upon the known devices and methods.

### STATEMENT OF INVENTION

The invention is defined in the accompanying claims.

### BRIEF DESCRIPTION OF THE DRAWINGS

The invention will now be described by way of example with reference to the accompanying drawings, in which:
Figure 1a is a diagram illustrating a satellite system, according to an embodiment of the invention;
Figure 1b is a flow chart illustrating steps of a method according to an embodiment of the invention;
Figure 2 is a diagram illustrating two types of satellite system, according to embodiments of the invention;
Figures 3a to 3d are diagrams illustrating orbital paths of a satellite formation according to an embodiment of the invention;
Figure 4a is a diagram illustrating a type of satellite system, according to an embodiment of the invention;
Figure 4b is a diagram illustrating different orbital planes for satellite systems according to embodiments of the invention; and
Figure 5 is a diagram illustrating orbital paths of a satellite formation according to an embodiment of the invention.

### DETAILED DESCRIPTION OF EMBODIMENTS

Embodiments of the invention aim to provide methods and systems for providing communication links at far lower cost and complexity than previously considered systems, and for providing low latency communication networks by avoiding latency hotspots, such as regions employing national data protection techniques such as deep packet inspection, or networks using bandwidth throttling, that increase latency. In embodiments, the communications link is established via satellite as opposed to going into and out of the high latency region. Embodiments of the invention also allow daily repeatable and predictable low latency communications, and improved consistency of latency.

In addition, linking financial markets together is most valuable when those markets are both trading, so the present invention proposes a constellation capable of providing a continuous service around the same time of day, daily, in line with user demand in contrast to providing a twenty-four hour network.

Furthermore, as in previously considered networks where point-to-point radio frequency (RF) links between towers are used to reduce latency in terrestrial networks (as fibre optic links are typically 1.5 times slower), to minimise latency in embodiments of the present invention the presentation of data entering and leaving the satellite network can be in the RF domain to avoid introducing further data processing and preparation latency.

As noted, low latency fibre networks are a common modality for long-distance communications networks. Terrestrial RF networks, using RF communication between communications towers, have also been used. These can get close to the theoretical speed of light round trip time (RTT) for some routes. If a tower cannot be built, i.e. in an ocean, the link goes into a fibre optic network, so for long links there are typically fibre optic sections. Moreover, the most direct line for such links may pass through territories with regulatory, stability or geographical challenges, making tower siting difficult.

Previous communications satellite networks typically either: have onboard processing and inter-satellite links, making latency uncompetitive; have no onboard processing, no inter-satellite links and are at a low altitude, meaning they cannot link distant regions using a single satellite in the link; are not used for real time communication; or are at too high altitude for latency to be competitive.

It may also be noted that there are particular challenges involved in establishing a satellite constellation or cluster or formation for communications, as compared to one for earth observation. For instance, a communications satellite according to embodiments of the invention is tasked with communicating with ground segments in two separate locations, at great distances, rather than with observing a single limited area below the satellite. This means that factors such as repeating a ground track in addition to using a sun synchronous orbit, and elevation angle become relevant, whereas for an EO constellation they may not be.

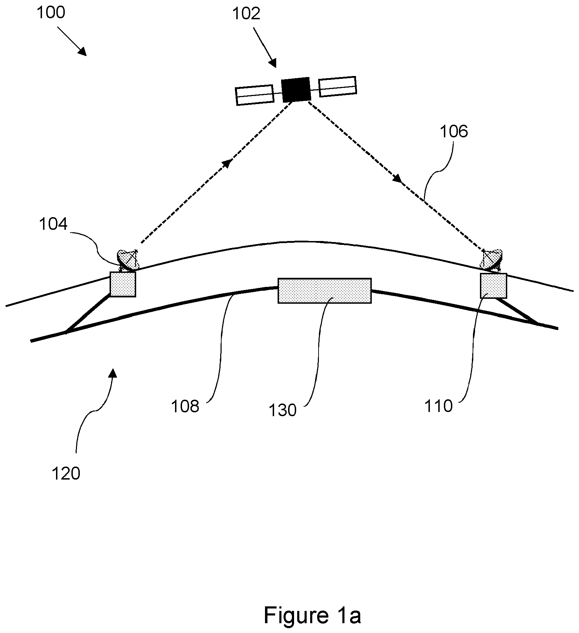

Figure 1a is a diagram illustrating a satellite system 100, according to an embodiment of the invention. The system operates to provide a communications capability in a geographic region 120. The geographic region in the examples described is a region on Earth, however embodiments of the invention can similarly be applied to regions on other celestial bodies. The existing communications network is a fibre network 108; embodiments of the invention are applicable to any communications network type (or combination) which covers a specific geographic region having some sort of specific modality of interest, such as an area of increased latency in the network. For example, embodiments of the invention can be used to replace sections of RF-based networks.

The network 108 has an area of increased latency 130; this may be due to any of the factors discussed above, and other similar factors. For example, there may be an enforced route diversion, such as to avoid a mountain range, meaning the fibre diverts from a direct as-the-crow-flies route which would require less latency. There may be a lower quality of fibre installation in a certain area. There may be an artificially introduced cause, such as deep packet inspection (DPI) or bandwidth throttling in that region. Although there are certain geographic regions which are currently more susceptible to artificially introduced causes of high latency, it may be that in future other or additional geographic regions or territories introduce these.

Therefore a system 100 is used to address the geographic area specifically and bypass the latency. The system includes a ground segment, having for example an antenna 104 and associated communications processing capability 110 at either side of the geographic region. The antennae communicate 106 with a space segment 102, which here is shown as a single satellite. The communication link is shown here in a single direction; the link of course is typically bi-directional. In an embodiment of the invention, the link is established in one direction in order to provide only a link in that single direction.

The ground segment may of course comprise an array of antennae, and may comprise different sites to manage the communications link for the given geographic region.

The ground segment may span only a part of the geographic region, sufficient to give an advantage. It may be split into further separate ground system segments spread across the geographic region to provide the link; in embodiments the link is provided between only two ground segments, so as to keep latency as low as possible.

In embodiments, the size of the geographic region is typically significant enough to merit the replacement of a communications link with the space segment of embodiments of the invention. Typically the distance between the two ground segments is at least hundreds of kilometres, and usually thousands of kilometres. At these distances, the latency of a fibre link (or similar) is significantly greater than the latency of the replacement satellite communications link according to embodiments of the invention. These distances are greater than, for example a local area fibre link, which may only be tens of kilometres long, or for instance a putative up/down LEO satellite communications link to a local area, which could be only hundreds of kilometres in trip length, since the distance across the ground would be relatively short. These significant distances go beyond the line of sight of a single typical LEO satellite.

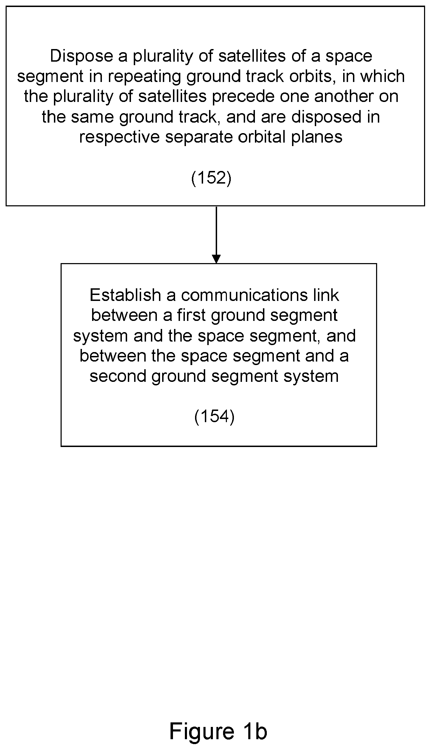

In one embodiment of the invention, as illustrated in Figure 1b, the space segment comprises a plurality of satellites. Each of these plurality of satellites is disposed in a repeating ground track orbit, in which the plurality of satellites precede one another on the same ground track, and are disposed in respective separate orbital planes (152). The communication link is then established (154) between the two ground segment systems and the space segment, using one or more of the plurality of satellites of the space segment.

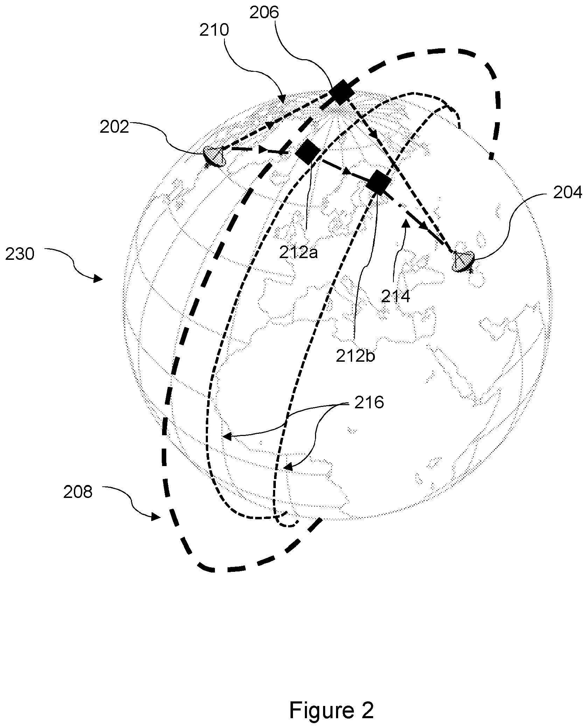

Figure 2 is a diagram illustrating two types of satellite system, according to different embodiments of the invention. The space segment can use a variety of different modalities to provide the geographically specific and/or low latency communications link. In embodiments of the invention, the space segment comprises at least one satellite 206 in a sun synchronous daily repeating ground track orbit 208 around the Earth 230. This orbit means that the satellite covers the same ground track or line of motion projected on the Earth's surface (at least) once each day.

In alternative embodiments the repeating ground track of the satellites may not be sun synchronous and/or daily repeating. For example, a larger constellation (of the order of hundreds, rather than a few or tens of satellites) may have sets of formations or groups of satellites preceding one another on the same ground track via separate orbital planes, nevertheless providing the advantages of these arrangements as described herein, but providing repeated coverage of the same area (at the same time each day) by having a number of groups of satellites so that there is always (or usually) a group available at the given time to provide the desired ground track coverage.

The orbit can be initiated and maintained so that this ground track is between the first and second ground segments 202 and 204 spanning the geographic region, so that (via the communications link 210 between the satellite and these ground segments) the satellite can repeatedly address that region for a specific period each day, in contrast to aiming at global coverage.

In embodiments, the satellite system consists of one or more communications satellites 206 in sun synchronous, daily or diurnally repeating ground track orbits. The sun synchronous orbit means that the satellites will be over the (repeating) ground track at the same local mean time (on the surface) each day, so that the satellite can not only address the same region repeatedly (every day), but at the same time each day. A satellite in such an orbit will have an integer number of orbits each day, one of which orbits passing through the given region (thus providing the repeated ground track) at the designated time each day. This for example allows the geographic region to be addressed for a short period each day, for instance to provide a link between financial markets on separate continents for a few hours every day, as described in more detail below. This also allows for the daily repeatable and predictable low latency communications of embodiments of the invention; in contrast to ground-based systems, satellite constellations of embodiments of the invention which selectively address the geographic region for a given period do not typically experience periods of higher or unpredictable latency, and can also provide improved consistency of latency. In addition, further features of embodiments of the invention can provide greater consistency and predictability of latency, as will be described below.

Systems of embodiments of the invention are in contrast to, for example, a communications constellation which may provide satellites in sun synchronous orbits, but not in repeating ground track orbits. In this case, the satellites will address the same part of their orbital paths at the same time each day, but they will not necessarily be over exactly the same ground region at that same time each day.

Similarly, these systems are in contrast to, for example, a communications constellation which may provide satellites in repeating ground track orbits, but which are not in sun synchronous orbits. In this case, the satellites will be over exactly the same ground region each day, but not necessarily at the same time each day. Such a constellation might for instance be a large constellation aiming at global communications coverage; the repeating nature of the orbits would allow the satellites of the constellation to repeat the areas of coverage so that the coverage is complete, but it is of no consequence when in particular a given satellite provides that repeated ground track.

This embodiment of the invention thus allows the same geographic region to be addressed not only each day, but at the same time each day.

In alternative embodiments the repeating ground track of a given satellite may not be sun synchronous and/or daily repeating. For example, a larger constellation (of the order of hundreds, rather than a few or tens of satellites) may have sets of groups of satellites preceding one another on the same ground track via separate orbital planes, nevertheless providing the advantages of these arrangements as described herein, but providing repeated coverage of the same area (at the same time) not by following sun synchronous daily repeating ground tracks, but by having a number of groups of satellites in different ground tracks, so that there is always (or usually) a group available at the given time to provide the desired ground track coverage.

It may also be notable that embodiments of the invention are particularly advantageous where the value of providing a communications link to a given region varies depending on the time of day. For example, in embodiments of the invention, a brief window of communications capability is provided for a given area at a given time of day, because it is of high value at that time to provide a link between the two regions, for example for linking financial markets at low latency. Other such time-critical instances may be online gaming events at certain times of the day which link geographic regions, and which require very low latencies. The improved consistency of latency of embodiments of the invention is also advantageous for communications links for certain demanding data networks, such as those providing data links for gaming, or for financial networks.

In alternative embodiments, a similar capability can be provided by a series of satellites 212a and 212b in a lower altitude orbit, providing a communication link 214 between the ground segments 202 and 204 via inter-satellite communication between two satellites in ground track orbits 216 separated in longitude, spanning the gap between the ground segments. At this lower altitude, the line of sight of a given satellite 212 will not be sufficient to view both the ground segments separated by the long distance around the circumference of the Earth. For example, the distance between northern Europe and Hong Kong is of the order of 8000km along the Earth's surface, the sort of distances that satellites in LEO will not be able to cover by a single satellite. At these large distances, the arc subtended between the ground segments may be of the order of 60-90 degrees.

In contrast, it can be seen from the Figure that the satellite 206 being in a higher orbit can view both ground segments at the same time. This modality may have the advantage of reducing latency, as the signal will not have to be subjected to inter-satellite processing and communication, although the signal will of course have further to travel overall.

In an embodiment, the lower altitude constellation can be provided with RF to RF communication between the satellites in order to reduce latency, and potentially to provide lower latency than for the higher altitude constellation. Nevertheless the advantage of the higher altitude constellation remains that there is only one satellite at any one time in the communications link between the ground stations 202 and 204. Therefore failure modes are reduced, and fewer satellites overall are required in the constellation.

It can be seen that elevations for the higher orbit link/constellation types as shown in Figure 2 will be relatively low at the ground segments, because this system is aiming to provide the most efficient option for the communication link; a single satellite in the link, rather than more than one (using inter-satellite communication); and as low altitude as possible in order to keep latency low. Hence, in order to cover the large size of the region within the line of sight of the single satellite 206, at the extreme end of this region where the ground segment is located, the satellite will appear low in the sky. In embodiments, the ground antennae can be raised from the ground in order to assist with improving the elevation angle.

In constellations or formations or clusters of embodiments of the invention, a following satellite proceeds along the previous satellite's ground track, to provide recurring or seamless coverage of the ground track. In an embodiment, this is used in a constellation of several satellites preceding each other along the ground track, to provide the link at the same geographic region over a given period of time. The orbits are therefore not only separately repeating ground track orbits, but they are also repeating the same ground track as each other, so that one precedes the other(s) on the same ground track. In the case of sun synchronous daily repeating orbits, these satellites' orbits will have slightly different orbital planes, in order to address the same ground track as the Earth rotates. In an example with near polar orbits, of the order of 110 degrees inclination, each successive satellite will be in an orbital plane having a slightly larger longitude of ascending node, or right ascension of ascending node (RAAN), so that each spacecraft will still cover the same ground track in spite of the Earth having rotated in the time between the overflight of each spacecraft. The satellites' orbits thus effectively chase the rotation of the Earth to maintain the ground track coverage. This is in contrast to previously considered formations which have the satellites disposed in a ring formation, in the same orbital plane (i.e. coplanar). These satellites will follow one after the other, but since the Earth has rotated in the time between each satellite pass, the ground in view of the satellite will have moved, and therefore the ground track for each satellite will be different.

In embodiments, additional satellites may be disposed nearby the other satellites in the constellation, for example in the same orbital plane (same value of RAAN) as other satellites, to provide redundancy should any of the satellites not be performing optimally.

Each satellite is also disposed at a different true anomaly in its orbit, so that during the overflight period the satellites are at different points in their respective orbits, and thus follow each other after an interval rather than being at the same point on the ground track at the same time.

In embodiments, different numbers of satellites and different altitudes can be used to provide the capabilities described. For sun synchronous daily repeating ground track orbits, the satellites will have an integer number of orbits in a day. Various altitudes of orbit having such an integer number of orbits are available. At a medium earth orbit (MEO) altitude of approximately 3400km, at inclination of 116 degrees, for a constellation with three satellites having nine orbits (each) per day, a satellite will have sufficient height to be able to address ground segments separated by the distances outlined above, around 8000km. Alternatively a ten period sun synchronous daily repeating ground track orbit for example may require a minimum of four satellites to close a communications link between Europe and Hong Kong for one hour and its altitude would be approximately 2720km at 110 degrees inclination.

At lower altitudes such as that shown at 216 in Figure 2, longer distances cannot be connected directly but in this case two waves of satellites can be flown, one wave 212b viewing one segment (say, in Hong Kong), the other wave 212a viewing the other (say, in Stockholm) and the two waves viewing each other. This is of course a more complicated system and may therefore be less reliable. This approach can be repeated at lower and lower altitudes, with more and more additional parallel waves or rings of satellites, until the altitudes become impractical for satellite constellations, either requiring too much propellant for keeping the spacecraft in orbit, or producing too much atmospheric drag on the satellites. A low altitude constellation according to an embodiment of the invention completes 16 revolutions per day at approximately 274km and inclination of about 97 degrees, though this would require a large number of satellites in the constellation, not least the significant number of satellites in the parallel waves in order to cover the large geographic distance between the ground segments spanning the geographic region.

At higher altitudes, the highest sun synchronous daily repeating ground track orbit is 5161 km with seven revolutions per day, though latency at this altitude would be much greater and likely uncompetitive with lower altitudes.

In an alternative, orbits having a half integer number of orbits per day could be used, with one set of satellites offering service on odd days and another set offering it on even days; this may be advantageous if the orbital mechanics of this constellation are easier to manage, though it would of course require more satellites than some arrangements.

In embodiments, the number of satellites in the constellation for a given orbital altitude modality can be increased to mitigate the elevation angles required. For instance, in the example given above with three satellites at around 3400km altitude with nine (integer) orbits per day, the elevation angles will initially be low as each satellite is picked up in the sky, will increase to a higher angle, and decrease again until the next satellite is picked up. Increasing the number of satellites in the constellation will therefore mean that the changeover to picking up the next satellite will happen when the currently linked satellite is at a higher elevation, so that the ground station is never linking to a satellite below a minimum elevation angle.

The ground segments 202 and 204 may include transmission and receipt technology of the type known to the art for communications networks, and typically comprise two or more user terminals at each end of the connection and one or more telemetry, tracking and control stations, which may be combined with a user terminal. Ground segment telemetry, tracking and control stations provides tele-commands and ranging to the space segment and receive telemetry and ranging responses from the space segment.

Communications with the formation satellites can be realised by methods known to the art, for example omnidirectional ground antennas capable of communicating with one or more satellites visible in the sky at the same time, motorized antenna mounts with high-gain, narrow beam antennas tracking individual satellites, or phased array antennas that can steer the beam electronically, together with software that can predict the path of each satellite in the constellation.

In embodiments of the invention, the communications link shown in Figures 1 and 2 can be made part of a wider network with optimised latency and/or improved consistency or predictability of latency. For example, the communications link provided by the space segment may, instead of being linked to a fibre network, be linked to a point-to-point RF network of antenna towers. In the case of a fibre network, the signal received from the satellite at the ground segment would typically be converted from the radio frequency signal into an encoded digital signal for transmission via the fibre, for example by a modem or similar processing device. In the case of the point-to-point RF network, this can minimise latency because the presentation of data entering and leaving the satellite network can be in the RF domain (from the receiving ground station antenna to the RF transmission) to avoid introducing further data processing and preparation latency.

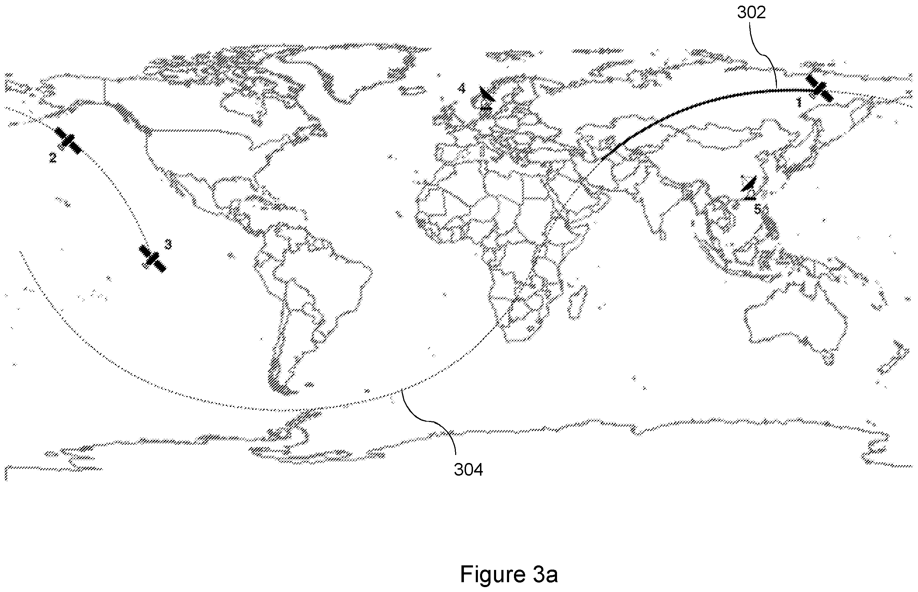

Figures 3a to 3d are diagrams illustrating orbital paths of a satellite formation according to an embodiment of the invention. The geographic region here is that between Europe and Hong Kong; in this embodiment, sun synchronous daily repeating satellite ground tracks orbits for satellites are combined to link Stockholm and Hong Kong for one hour a day while financial markets are trading on both continents. This avoids intermediary latency, for example that which might otherwise be incurred by a fibre network if for example deep packet inspection is being used on that network.

In embodiments of the invention, an advantage of a medium earth orbit formation or constellation is not only that the large distances in such a communications link can be covered by a single satellite in the link (ground segment - satellite - ground segment, rather than multiple satellites in the link between the ground segments) since the line of sight reaches much further at higher altitude, but also that the orbital period at higher altitude is longer, which means the satellites are travelling less fast, which means that fewer satellites are required to provide the link for the given period (here being one hour). For example, at these MEO altitudes, the orbital period is around 2.5 hours; at LEO the period is around 1.5 hours. Furthermore, a constellation in lower earth orbit would in addition to a shorter orbital period have much shorter periods of being in view of the ground segment, due to the lower altitude. This would again require more satellites in the constellation than a higher altitude MEO formation.

The ground track for the satellites is indicated as a sinusoidal-like dotted line 304 on the global map in Figures 3a to 3d. The section of the ground track at which the satellites are in sight of the ground segment systems, i.e. the active part of the orbit for this low latency service, when both ground stations are in view from a satellite, is highlighted by the solid section 302 of the ground track 304. The satellites of the constellation are indicated at (1) Satellite #1, (2) Satellite #2 and (3) Satellite #3. (4) is the ground Earth station in Stockholm, and (5) the station in Hong Kong.

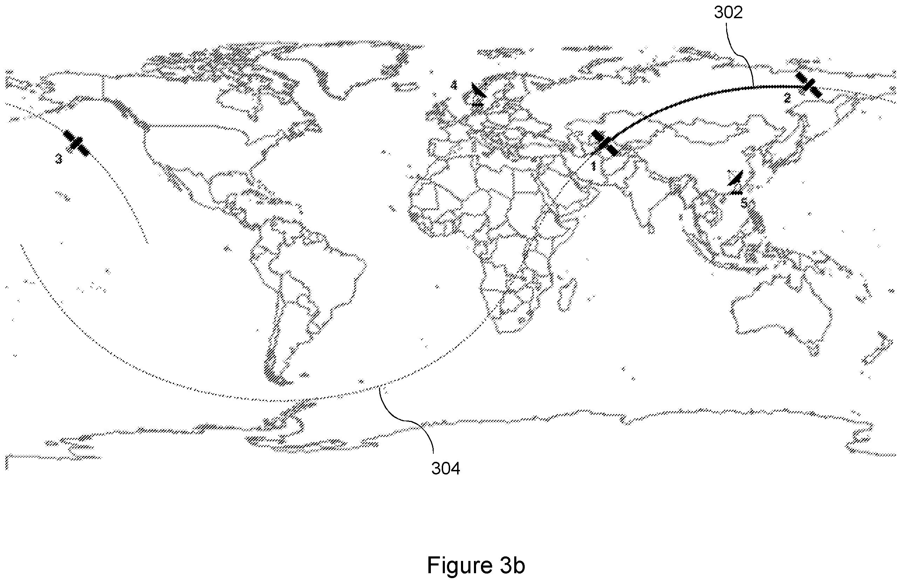

Figure 3a in this embodiment shows the configuration of the constellation at 06:58 UTC showing first contact with both ground stations 4 and 5 from satellite 1 to establish lock two minutes before service commencement, and then for approximately 20 minutes of service. Satellite 2 then connects the ground stations approximately 2 minutes before satellite 1 loses visibility of either ground segment, to allow a make-before-break connection, and connects them again for approximately another 20 minutes. Figure 3b is at 07:18 UTC showing the overlap between satellites 1 and 2 in the active arc (approximately 2 minutes).

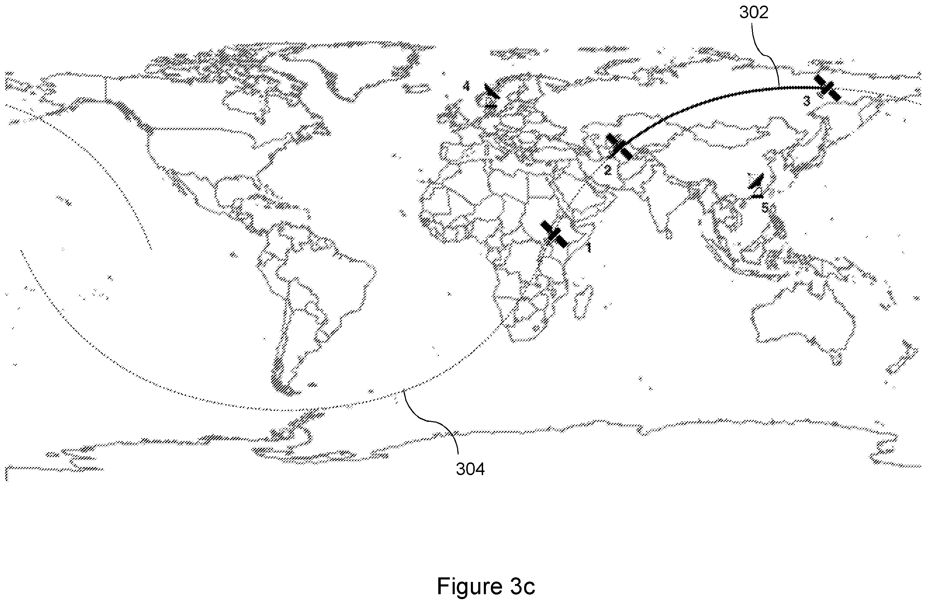

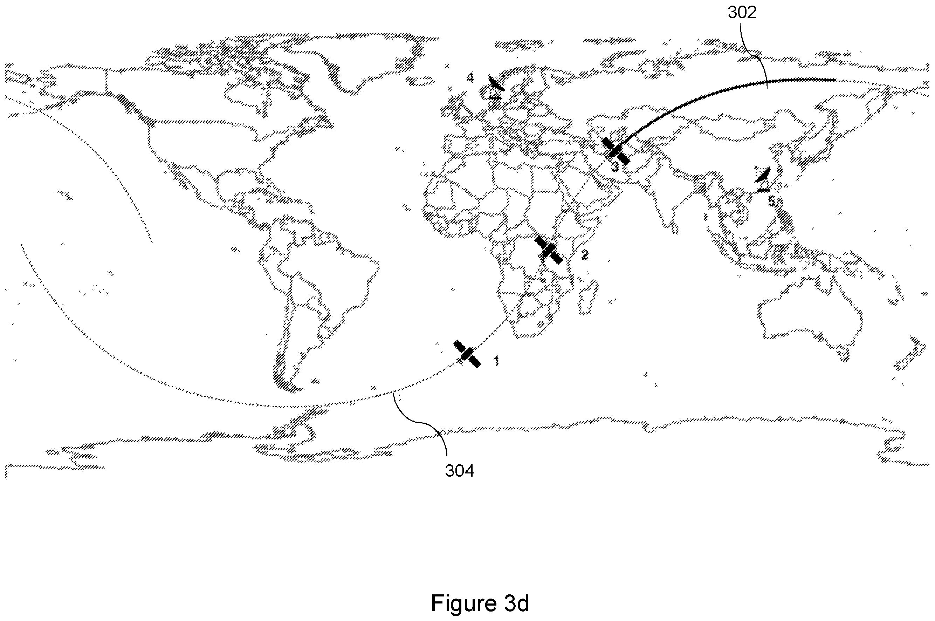

Satellite 3 follows satellite 2 in a similar fashion giving a combined connection period of approximately 62 minutes, 60 of which is the service period. Figure 3c is at 07:38 UTC showing the overlap between satellite 2 & 3 in the active arc (approximately 2 minutes). Figure 3d is at 08:00 UTC showing satellite 3 at the end of its active arc thus demonstrating a 1 hour service. Since the satellites have sun synchronous daily repeating ground track orbits, the constellation can repeat this service at the same time of day between these two ground stations.

In this example the orbital parameters of satellite 1 are: semi-major axis = 9761.75km; eccentricity = 0 degrees; inclination = 116.123 degrees; argument of perigee = 0 degrees; RAAN = 71 degrees; and true anomaly = 228 degrees.

The orbital parameters of satellite 2 are: semi-major axis = 9761.75km; eccentricity = 0 degrees; inclination = 116.123 degrees; argument of perigee = 0 degrees; RAAN = 76 degrees; and true anomaly = 183 degrees.

The orbital parameters of satellite 3 are: semi-major axis = 9761.75km; eccentricity = 0 degrees; inclination = 116.123 degrees; argument of perigee = 0 degrees; RAAN = 81 degrees; and true anomaly = 138 degrees.

In an alternative embodiment of the invention, satellites of the constellation can be configured to establish further communication links with other locations, once those locations come into view (i.e. once the elevation angle of the currently linked satellite increases sufficiently to bring more distant locations in the current communication line of sight into view). For example, a constellation as described with reference to Figures 3a to 3d can be provided, and the satellites can be additionally tasked with establishing a further link to London, once the elevation angle is sufficient to permit this. The link can either be switched over to London from Stockholm (for example to bypass a fibre link between the two) for the period for which London is in view, or an additional or supplementary link to London can be provided for that period. It can be seen that this will provide an additional, though shorter, window of even further decreased communications latency between the two ground segments.

In embodiments of the invention, the satellites can be configured to allow modification or adjustment of one or more parameters of the orbits. For instance, a constellation serving a communications link between two given locations can be re-tasked to move the repeating ground track to another location, to establish a communications link for that region instead. The altitude of the constellation could be altered, in order to provide a different latency, or communications modality. For the repeating ground track the altitude would of course have to be altered to one maintaining an integer number of orbits per day. Such alterations to orbital parameters would of course require that the satellites carry additional propellant to cater for these manoeuvres.

In another embodiment of the invention, it may be possible to provide a bypass communications link for a geographic region in the manner of other embodiments described above, simply by providing a larger constellation or formation of satellites which are in repeating ground track orbits (so the same region is addressed), but which is large enough that the first satellite of the constellation is preceded by the last, so that constant coverage of the geographic region is provided (rather than specific coverage at a given time). In such an embodiment, the satellites would not need to be in sun synchronous orbit to provide the repeat at the same time each day, as one of the satellites in the constellation will always be addressing the area. However, this would need a large number of satellites, and therefore would not provide the advantage of addressing the area with only a small constellation. It would however maintain the advantages of addressing the same area every day at the same time, and of providing predictable and consistent latency.

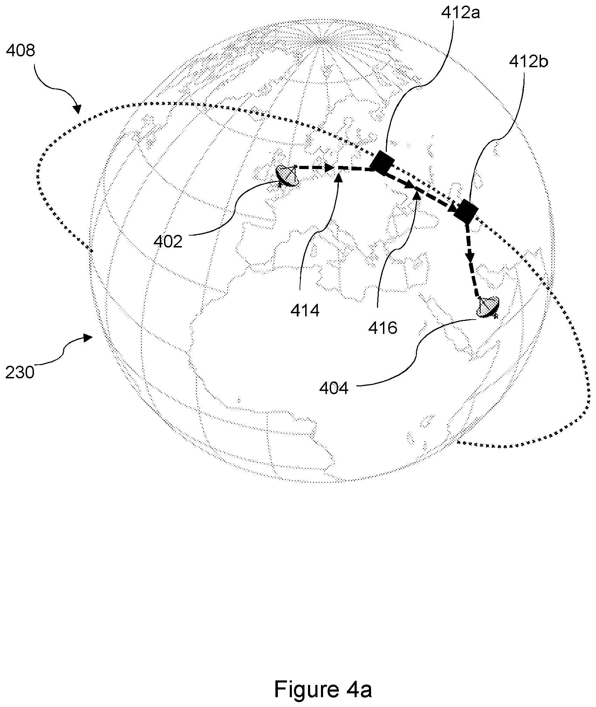

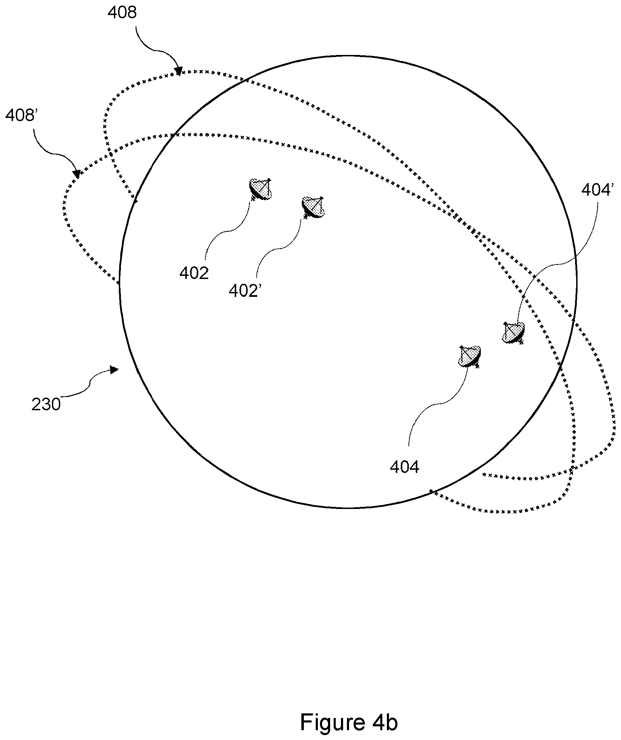

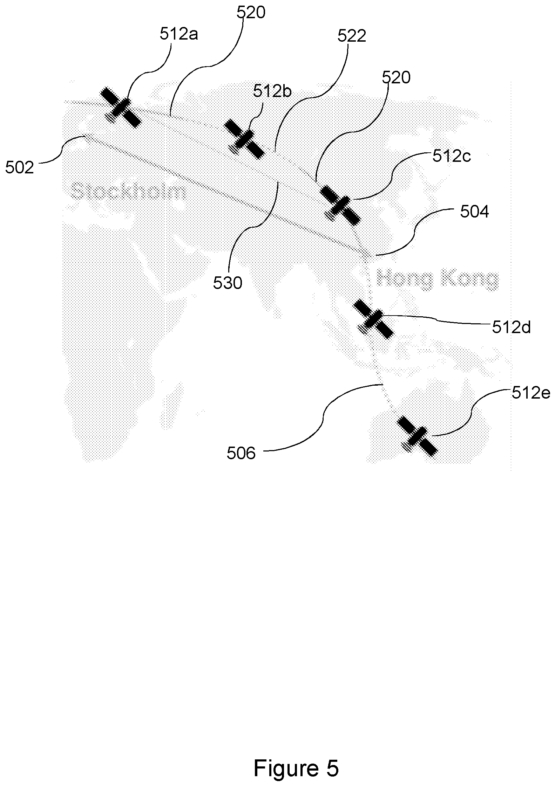

Figures 4a, 4b and 5 illustrate one example of another embodiment of the invention. In this embodiment, the ground track traced by the satellite(s) is in a direction approximately between the ground stations being addressed, rather than in a direction bisecting the ground stations, as in Figures 2 and 3a-3d. Figure 4a illustrates an example of this embodiment - ground stations 402 and 404 are addressed by a space segment comprising satellites 412a and 412b, via a communication link 414. The satellites here are in sun synchronous daily repeating ground track orbit(s) 408 around the Earth 230. In this example, the satellites are at a lower altitude, and therefore the ground stations are out of a line of sight for a single satellite, so an inter-satellite link 416 is provided to complete the communications link. In other examples, a single satellite could be provided at a higher altitude (in similar fashion to that described with reference to Figure 2).

In this embodiment, the satellites of the constellation precede each other on the same ground track, so that the same line between the two ground stations is traced by one satellite after another, to maintain the link between the ground stations. This is in contrast to the embodiment illustrated in Figures 2 and 3a-3d, in which the link is maintained by satellites preceding each other along a ground track which bisects the ground stations.

However, similarly to the previous embodiment, satellites of the constellation here will also need to be provided in separate orbital planes, in order to continue addressing the same ground track (between the ground stations) as the Earth rotates. This is illustrated in Figure 4b. Ground stations at the first position 402 and 404 can be addressed by a satellite above and between the stations following a ground track roughly between the stations, on an orbit 408. As the Earth rotates, the ground stations 402 and 404 move to new positions 402' and 404', and are therefore not as readily address by a satellite in orbit 408, because the ground track of this orbit is no longer closely aligned to a path between the stations. Therefore, a satellite in another orbit 408', which is in a different orbital plane as can be seen from the diagram, is used to continue the communications link.

Figure 5 is a diagram illustrating an example of an arrangement of a satellite constellation according to this embodiment. The communications link is to be established between Europe and Asia as in the embodiment illustrated in Figures 3a-3d, but in this case, the ground track 506 for the satellite constellation is approximately between the Stockholm (502) ground station and the Hong Kong (504) ground station, rather than bisecting them.

As before, the series of satellites 512a to 512e follow each other along the same ground track, by being in slightly differing orbital planes (see Figure 4b). General orbital parameters for these satellites may be: 1257.12km altitude, 100.807 degree inclination, eccentricity 0 degrees and argument of perigee 0 degrees, giving 13 revolutions per day. RAAN and true anomaly orbital parameters will vary, according to the arrangement of the satellites into the separate orbital planes (see below).

In Figure 5, the solid section of the ground track 520 represents the active arc, the period or section of arc/track in which the satellite at that position is in view of the local ground station (for example, here 512a is in view of Stockholm 502, and 512c is in view of Hong Kong 504). The dotted ground track 522 indicates the inactive sections of arc. The line 520 illustrates the inter-satellite link which is established, in this case between 512a and 512c, to complete the communications link between the ground stations.

The number of spacecraft shown here is for illustrative purposes and does not represent satellite positions per se in this embodiment. One example of satellite positions is shown in the table in the following section. In embodiments, the inter-satellite link may be achieved between neighbouring satellites in the constellation, and in others there may be more than one satellite between those establishing the inter-satellite link.

In embodiments, the constellation can be used to provide communications links for more than one geographic region, should a low or predictable latency link be required for that region. For instance, the arrangement shown in Figure 5 can advantageously be used to provide an additional trans-atlantic communications link, using the same ground track and orbital planes (since the ground track which links Europe and Asia then follows on to trace a line between Europe and the US). Since the embodiments of the invention using inter-satellite links to provide, for example, an EU-Asia link, are at lower altitudes than other embodiments, this lower altitude provides sufficiently low latency for a trans-atlantic link for this to be competitive with other trans-atlantic communications options. In addition, since the Europe/US link is shorter in distance, an arrangement such as this while having an inter-satellite link for the EU-Asia link, need only use a single satellite for the trans-atlantic link, since a single satellite in such an arrangement can be in view of both London and New York. In other embodiments, other ground tracks can provide multiple stages or sections of links, and can use different connectivity (or the same) between satellites.

To reduce the number of spacecraft required in such embodiments, the contact time with ground segments should be maximised and zones where there is no contact should be no longer than the maximum contact time. The maximum service period per spacecraft for the Hong Kong - Stockholm link is 7 minutes 30 seconds, driven by the Hong Kong ground segment view crossing the GEO arc and it going below 5 degrees in elevation; the HK ground segment will be in view for around 8 minutes, but this accounts for 30 seconds of lock. It also has a minimum service interruption (when HK is out of view, but Stockholm not yet in view) time of 7 minutes; 6 minutes 30 seconds while no stations are in view and 30 seconds till modem lock is reacquired.

The maximum service period per spacecraft for the London - New York link is 6 minutes and is driven by: the London ground segment view crossing the GEO arc, coinciding with the New York ground segment reaching 5 degrees in elevation (with 30 seconds for lock), then 6 minutes service, then London ground segment view going below 5 degrees in elevation. Of course, in alternative embodiments with differing numbers of spacecraft, or at different altitudes, these numbers will vary correspondingly.

In embodiments, the constellation may be made up of groups of satellites in the same orbital plane, with inter-satellite links to other groups in the different orbital planes. This arrangement allows for a system in which satellites of the constellation precede one another on the same ground track, and are in different orbital planes, but within the constellation the groups of satellites in the same orbital plane can, for example, include a redundant satellite to replace one of the others in the event of a malfunction. A redundant satellite in another orbital plane would be less efficient in terms of the delta required to move it into position.

In embodiments, this may best be achieved by slightly differing ground tracks for the satellites in each group, in order to maintain the link in approximately the same line of sight, with maximum contact times. For example, in an embodiment, shown in the table below, the letter of each spacecraft represents the RAAN plane it is in and the number represents the daily repeating ground track it is in. Spacecraft A1 has an inter satellite link to B1, A2 to B2, A3 to B3, B1 to C1, and so on. In flight, spacecraft A1 is active in view of Stockholm and B1 is active in view of Hong Kong (e.g. as shown figuratively as 512a and 512c in Figure 5). Each spacecraft is spaced 5 minutes apart.

| | **RAAN** | **TRUE ANOMALY** |
|---|---|---|
| A1 | 316 | 148.125 |
| A2 | 316 | 131.875 |
| A3 | 316 | 115.625 |
| B1 | 319.75 | 99.375 |
| B2 | 319.75 | 83.125 |
| B3 | 319.75 | 66.875 |
| C1 | 323.5 | 50.625 |
| C2 | 323.5 | 34.375 |
| C3 | 323.5 | 18.125 |
| D1 | 327.25 | 1.875 |
| D2 | 327.25 | 345.625 |
| D3 | 327.25 | 329.375 |
| E1 | 331 | 313.125 |
| E2 | 331 | 296.875 |
| E3 | 331 | 280.625 |

The London-New York link can then be established by the same constellation, simply by linking via single spacecraft in turn, but only requiring the first of each group: A1, B1, C1 and so on (because, as noted above, the distance in short enough for a single satellite link).

Although the ground tracks 1, 2 and 3 are slightly dissimilar, this type of constellation allows the close approximation of satellites following the same ground track, from different orbital planes (as with other embodiments described herein), but also allows the addition of redundancy satellites in each group. In order to provide a more reliable service, such redundant spacecraft can be provided to be able to replace failed spacecraft within a small number of days, by having redundant spacecraft in the same RAAN plane as the group of spacecraft they are backing up. For example in the group A above, a further spacecraft A4 can be provided nearby, which can manoeuvre to replace one of A1 to A3 in the event of their failure. In principle, in another embodiment a redundant spacecraft could be provided in a single series of satellites all in separate individual orbital planes preceding along the same ground track (in similar fashion to Figures 2 and 3a-3d), perhaps every third or fourth spacecraft. While this would provide precisely the same ground track for the active satellites, the energy or delta-v required for each redundant satellite to replace one of the nearby satellites would be much higher, because it would have to change orbital plane.

In the embodiment described here and referring to the table, A4 would be in the same plane as A1 to A3, and could replace any. In an embodiment, A4 would be in a very similar ground track as A2, in a similar position but at slightly different true anomaly. These constellations with redundant spacecraft will thus typically not follow exactly the same ground track (as they will be in the same orbital plane, but in a different position as they are not being used in the current constellation) and ground station azimuth and elevation will vary relative to them. The London - New York link may in some such arrangements not tolerate much variation in this to maintain the active arcs described, but the Hong Kong - Stockholm link may be more tolerant in this area.

For the embodiments described above, in alternatives it would be possible for the inter-satellite link to be established between satellites in the same group, i.e. maintaining the same RAAN plane; this fixes the inter-satellite link range between spacecraft, because they are in the same plane (A1-A2, A2-A3, etc.). However, here there will be large changes in inter-satellite link distances at the transition between groups, i.e. A3-B1. In other embodiments noted above, maintaining the same ground track (i.e. linking A1 to B1, A2 to B2, etc.) instead maintains the same latency variation from spacecraft to spacecraft. There will of course be an amount of latency variation, due to the spacecraft moving through their orbits being in different RAANs, but this variation will be the same for each inter-satellite link, and therefore more repeatable between satellite pairs.

It may be seen that the described alternatives and additions to the embodiments described in relation to Figures 2 and 3a-3d may also be applied to the embodiments described immediately above. For example, these arrangements may also benefit from increasing the number of satellites to mitigate elevation angles. Here, and in other embodiments, increasing the number of satellites in the constellation may provide other benefits, such as minimizing the range required to complete the communications link at any one point. For example, for a New York to London link, when a preceding satellite is coming out of view (out of the line of sight of the ground segment(s)), and the following satellite is in view so is engaged for communication, that satellite will be at its maximum range (from the ground segment). As it proceeds, it will reach an apex at closest or ideal range, and later a further maximum range before being out of view or the following satellite being in view. If further satellites are added, the difference between these maximum and the apex can be reduced, as the following satellite will be in view at an earlier point.

Adding further spacecraft in this manner can provide greater consistency of latency, leading to more predictable and reliable latency; since there is even less variation in range, variability of latency is reduced still further.

Embodiments of the invention can provide repeatable and predictable latency, in contrast with previously considered communications paradigms. For instance, even a fibre link with sufficient latency for a given network, will experience periods of higher latency, and periods of unpredictable latency. In contrast, embodiments of the invention provide (via satellite communications replacing ground-based systems) a means for repeatable and predictable latency. In embodiments, these are provided for a given geographic region or span, so that not only can an alternative low latency link for that region be provided, but the link can also have reliable latency. In embodiments, groups of satellites in the same orbital plane provided to link to other groups in other orbital planes, as described above, can also further maximise latency consistency, in addition to providing redundancy.

In embodiments, the range of the satellite which is in the active arc, providing a (or part of) the communication link, can be matched with the range of the incoming satellite which is about to pick up the link. The geometry of the constellation can be arranged such that the next satellite (or pair, or set, if using inter-satellite links) is available for handover to optimise range matching. The range matching itself in embodiments may be implemented by timing of switching rather than precise positioning of the spacecraft. When the active satellite is coming out of view of a given ground segment or out of its active arc, the handover can be timed for when the range of the outgoing satellite from the ground segment matches the range at that moment for the incoming satellite. This matching can reduce jitter in the link, again providing improved consistency. This is in contrast to previously considered arrangements, in which jitter caused by range differences in handover simply had to be tolerated in the communications link, or in which reduction of such jitter was achieved by the addition of further satellites in order to mitigate these range effects, thus creating a much larger constellation.

For satellites such as those described with reference to Figures 4a, 4b and 5, the range of, for example, satellite A1 going out of view in a London-New York link can be matched with satellite A2 coming into view; the range of A1 and A2 to the New York ground station will of course be different, as they are in different ground tracks (in the same orbital plane), but the constellation geometry can be arranged such that the overall link range for New York - A1 or A2 - London can be the same - for example, if A1 is closer to New York, A2 can be positioned closer to London.

The satellite(s) used in embodiments of the invention may be of the kind known to the art capable of providing communications links between ground segments (thereby allowing communications channels over those links to be established). For example, in embodiments a typical satellite may comprise a 100-200kg spacecraft having a 25-80kg payload, with a power consumption of 10-250W on orbit average, using electric propulsion for station keep, and having approximately 5-8 years operational mission life.

The low latencies achievable by arrangements according to embodiments of the invention are significant improvements on latencies currently available in problematic communications regions. For example, for a low latency fibre optic network, an RTT between London and Hong Kong may be 160ms. This is typical and is slower than the theoretical 64ms speed of light RTT due to the 1.5 times fibre delay, the route not being direct and high latency in China's lawful intercept area.

The system according to embodiments of the invention can reduce the London to Hong Kong round trip time from 160ms to around 104ms, assuming 0.25ms delay to transmit or receive in a modem and 22ms RTT between London and Stockholm.

Note that, in an embodiment, the link can be established from, say, Asia to the EU only, using a single direction communications link via the space segment; this may be of use if the infrastructure at the Asian end is not sufficient for example to provide the maintenance of the signal in the RF domain.

It will be appreciated by those skilled in the art that the invention has been described by way of example only, and that a variety of alternative approaches may be adopted without departing from the scope of the invention, as defined by the appended claims. Features described in relation to a particular embodiment may also be applicable to other described embodiments.

## Claims

1. A satellite system (100) for providing a communications link (214) for a defined geographic region (120), wherein the geographic region is associated with a given communications network latency (130), the system comprising:
a space segment (102) comprising a plurality of satellites; and
first and second ground segment systems (104,110), wherein the first and second ground segment systems are disposed at respective first and second locations, the first and second locations spanning the geographic region,
wherein the space segment and the first and second ground segment systems are configured to establish a communications link (106) between the first and second ground segment systems via the space segment, the communications link having a lower latency than the given communications network latency associated with the geographic region,
wherein each of the plurality of satellites is in a repeating ground track orbit (208),
wherein the plurality of satellites precede one another on the same ground track,
and wherein the plurality of satellites are disposed in respective separate orbital planes (208, 216, 408, 408').

2. A satellite system according to Claim 1, wherein each of the plurality of satellites is in a sun synchronous daily repeating ground track orbit.

3. A satellite system according to any preceding claim, comprising a third ground segment system and a fourth ground segment system,
wherein the space segment and the third and fourth ground segment systems are configured to establish a communications link for a secondary geographic region between the third and fourth ground segment systems via the space segment,
and wherein the orbits of the plurality of satellites are arranged so that the satellites, following overflight of a first geographic region on the ground track, overfly the secondary geographic region on the ground track so that they are in view of the third and fourth ground segment systems, and so that an overflight is during a given period every day.

4. A satellite system according to any preceding claim, wherein the plurality of satellites comprises a plurality of groups of satellites, wherein the groups of satellites are disposed in respective separate orbital planes,
and wherein satellites of a given group of satellites are disposed in the same orbital plane.

5. A satellite system according to Claim 4, wherein a first satellite of a first group of satellites and a first satellite of a second group of satellites precede one another on the same first ground track,
and wherein a second satellite of the first group of satellites and a second satellite of the second group of satellites precede one another on the same second ground track.

6. A satellite system according to Claim 4 or Claim 5, wherein at least one group of satellites comprises at least one redundancy satellite, operable to replace one of the other satellites of the group.

7. A satellite system according to Claim 6, wherein the at least one redundancy satellite is disposed in the same orbital plane as the other satellites of the group, and precedes at least one satellite of another group of satellites on the same or a similar ground track.

8. A satellite system according to any preceding claim, wherein the plurality of satellites are spaced such that a handover is performable at a point at which a preceding satellite and a following satellite are at the same range from a given ground segment system.

9. A satellite system according to any preceding claim, wherein the plurality of satellites are operable to provide an inter-satellite communications link (214, 416), and wherein the system is configured to establish a communications link for the geographic region between the ground segment systems via the inter-satellite communications link of the space segment.

10. A space segment (102) for a satellite system (100) according to any preceding claim, the space segment comprising a plurality of satellites, the satellites being operable to communicate with at least one of the first and second ground segment systems (104, 110), and wherein each of the plurality of satellites are in a repeating ground track orbit (208),
wherein the plurality of satellites precede one another on the same ground track,
and wherein the plurality of satellites are disposed in respective separate orbital planes (208, 216, 408, 408').

11. A method of providing a communications link (106) for a defined geographic region (120), wherein the geographic region is associated with a given communications network latency (130), the method comprising:
for a space segment (102) comprising a plurality of satellites, disposing the plurality of satellites in repeating ground track orbits (208), wherein the plurality of satellites precede one another on the same ground track, and wherein the plurality of satellites are disposed in respective separate orbital planes (208, 216, 408, 408'); and
establishing a communications link (106) between a first ground segment system (104, 110) and the space segment, and between the space segment and a second ground segment system (104, 110), the first and second ground segment systems being disposed at respective first and second locations, the first and second locations spanning the geographic region, the communications link having a lower latency than the given communications network latency associated with the geographic region.

12. A method according to Claim 11, the plurality of satellites comprising a plurality of groups of satellites, wherein the groups of satellites are disposed in respective separate orbital planes, and wherein satellites of a given group of satellites are disposed in the same orbital plane, and the plurality of satellites being operable to provide an inter-satellite communications link (214, 416),
the method comprising establishing an inter-satellite link between a first satellite of a first group, and a first satellite of a second group, to establish the communications link for the geographic region between the ground segment systems via the inter-satellite communications link of the space segment.

13. A method according to Claim 12, wherein a first satellite of a first group of satellites and a first satellite of a second group of satellites precede one another on the same first ground track,
and wherein a second satellite of the first group of satellites and a second satellite of the second group of satellites precede one another on the same second ground track,
the method comprising, following establishing the inter-satellite link between the first satellite of the first group, and the first satellite of the second group, establishing the inter-satellite link between a second satellite of the first group, and a second satellite of the second group.

14. A method according to Claim 13, comprising, for third and fourth ground segment systems configured to establish a communications link for a secondary geographic region, establishing the communications link between the third ground segment system, a single satellite of the first group of satellites, and the fourth ground segment system,
and subsequently establishing the communications link between the third ground segment system, a single satellite of the second group of satellites, and the fourth ground segment system.

## Patentansprüche

1. Satellitensystem (100) zum Bereitstellen einer Kommunikationsverbindung (214) für eine definierte geografische Region (120), wobei die geografische Region mit einer bestimmten Kommunikationsnetzwerklatenz (130) verbunden ist, wobei das System umfasst:
ein Raumsegment (102) umfassend eine Vielzahl an Satelliten; und
erste und zweite Bodensegmentsysteme (104, 110), wobei die ersten und zweiten Bodensegmentsysteme jeweils an ersten und zweiten Standorten angeordnet sind, wobei die ersten und zweiten Standorte die geografische Region umfassen,
wobei das Raumsegment und die ersten und zweiten Bodensegmentsysteme konfiguriert sind, um über das Raumsegment eine Kommunikationsverbindung (106) zwischen den ersten und zweiten Bodensegmentsystemen herzustellen, wobei die Kommunikationsverbindung eine geringere Latenz als die bestimmte Kommunikationsnetzwerklatenz aufweist, die mit der geografischen Region verbunden ist,
wobei sich jeder der Vielzahl an Satelliten in einem Orbit mit sich wiederholender Bodenspur (208) befindet,
wobei die Vielzahl an Satelliten einander auf derselben Bodenspur vorausgehen,
und wobei die Vielzahl an Satelliten jeweils in unterschiedlichen Umlaufbahnen (208, 216, 408, 408') angeordnet sind.

2. Satellitensystem nach Anspruch 1, wobei sich jeder der Vielzahl an Satelliten in einem sonnensynchronen Orbit mit sich täglich wiederholender Bodenspur befindet.

3. Satellitensystem nach einem vorstehenden Anspruch, umfassend ein drittes Bodensegmentsystem und ein viertes Bodensegmentsystem,
wobei das Raumsegment und die dritten und vierten Bodensegmentsysteme konfiguriert sind, um über das Raumsegment eine Kommunikationsverbindung für eine zweite geografische Region zwischen den dritten und vierten Bodensegmentsystemen herzustellen,
und wobei die Orbits der Vielzahl an Satelliten derart angeordnet sind, dass die Satelliten infolge des Überfliegens einer ersten geografischen Region auf der Bodenspur die zweite geografische Region auf der Bodenspur überfliegen, sodass sie für die dritten und vierten Bodensegmentsysteme sichtbar sind und sodass ein Überfliegen jeden Tag während eines bestimmten Zeitraums erfolgt.

4. Satellitensystem nach einem vorstehenden Anspruch, wobei die Vielzahl an Satelliten eine Vielzahl an Gruppen von Satelliten umfasst, wobei die Gruppen von Satelliten jeweils in unterschiedlichen Umlaufbahnen angeordnet sind,
und wobei Satelliten einer bestimmten Gruppe von Satelliten in derselben Umlaufbahn angeordnet sind.

5. Satellitensystem nach Anspruch 4, wobei ein erster Satellit einer ersten Gruppe von Satelliten und ein erster Satellit einer zweiten Gruppe von Satelliten einander auf derselben ersten Bodenspur vorausgehen,
und wobei ein zweiter Satellit der ersten Gruppe von Satelliten und ein zweiter Satellit der zweiten Gruppe von Satelliten einander auf derselben zweiten Bodenspur vorausgehen.

6. Satellitensystem nach Anspruch 4 oder Anspruch 5, wobei mindestens eine Gruppe von Satelliten mindestens einen redundanten Satelliten umfasst, derart betreibbar, dass er einen der anderen Satelliten der Gruppe ersetzen kann.

7. Satellitensystem nach Anspruch 6, wobei der mindestens eine redundante Satellit in derselben Umlaufbahn wie die anderen Satelliten der Gruppe angeordnet ist und mindestens einem Satelliten einer anderen Gruppe von Satelliten auf derselben oder einer ähnlichen Bodenspur vorausgeht.

8. Satellitensystem nach einem vorstehenden Anspruch, wobei die Vielzahl an Satelliten derart beabstandet ist, dass eine Übergabe an einem Punkt durchführbar ist, an dem ein vorangegangener Satellit und ein nachfolgender Satellit dieselbe Reichweite zu einem bestimmten Bodensegmentsystem aufweisen.

9. Satellitensystem nach einem vorstehenden Anspruch, wobei die Vielzahl an Satelliten zum Bereitstellen einer Intersatelliten-Kommunikationsverbindung (214, 416) betreibbar ist, und wobei das System konfiguriert ist, um über die Intersatelliten-Kommunikationsverbindung des Raumsegments eine Kommunikationsverbindung für die geografische Region zwischen den Bodensegmentsystemen herzustellen.

10. Raumsegment (102) für ein Satellitensystem (100) nach einem vorstehenden Anspruch, wobei das Raumsegment eine Vielzahl an Satelliten umfasst, wobei die Satelliten zum Kommunizieren mit mindestens einem der ersten und zweiten Bodensegmentsysteme (104, 110) betreibbar sind und wobei sich jeder der Vielzahl an Satelliten in einem Orbit mit sich wiederholender Bodenspur (208) befindet,
wobei die Vielzahl an Satelliten einander auf derselben Bodenspur vorausgehen,
und wobei die Vielzahl an Satelliten jeweils in unterschiedlichen Umlaufbahnen (208, 216, 408, 408') angeordnet sind.

11. Verfahren zum Bereitstellen einer Kommunikationsverbindung (106) für eine definierte geografische Region (120), wobei die geografische Region mit einer bestimmten Kommunikationsnetzwerklatenz (130) verbunden ist, wobei das Verfahren umfasst:
für ein Raumsegment (102) umfassend eine Vielzahl an Satelliten, Anordnen der Vielzahl an Satelliten in Orbits mit sich wiederholender Bodenspur (208), wobei die Vielzahl an Satelliten einander auf derselben Bodenspur vorausgehen, und wobei die Vielzahl an Satelliten jeweils in unterschiedlichen Umlaufbahnen (208, 216, 408, 408') angeordnet sind; und
Herstellen einer Kommunikationsverbindung (106) zwischen einem ersten Bodensegmentsystem (104, 110) und dem Raumsegment und zwischen dem Raumsegment und einem zweiten Bodensegmentsystem (104, 110), wobei die ersten und zweiten Bodensegmentsysteme jeweils an ersten und zweiten Standorten angeordnet sind, wobei die ersten und zweiten Standorte die geografische Region umfassen, wobei die Kommunikationsverbindung eine geringere Latenz als die bestimmte Kommunikationsnetzwerklatenz aufweist, die mit der geografischen Region verbunden ist.

12. Verfahren nach Anspruch 11, wobei die Vielzahl an Satelliten eine Vielzahl an Gruppen von Satelliten umfasst, wobei die Gruppen von Satelliten jeweils in unterschiedlichen Umlaufbahnen angeordnet sind, und wobei Satelliten einer bestimmten Gruppe von Satelliten in derselben Umlaufbahn angeordnet sind, und wobei die Vielzahl an Satelliten zum Bereitstellen einer Intersatelliten-Kommunikationsverbindung (214, 416) betreibbar ist,
wobei das Verfahren das Herstellen einer Intersatelliten-Verbindung zwischen einem ersten Satelliten einer ersten Gruppe und einem ersten Satelliten einer zweiten Gruppe umfasst, um die Kommunikationsverbindung für die geografische Region zwischen den Bodensegmentsystemen über die Intersatelliten-Kommunikationsverbindung des Raumsegments herzustellen.

13. Verfahren nach Anspruch 12, wobei ein erster Satellit einer ersten Gruppe von Satelliten und ein erster Satellit einer zweiten Gruppe von Satelliten einander auf derselben ersten Bodenspur vorausgehen,
und wobei ein zweiter Satellit der ersten Gruppe von Satelliten und ein zweiter Satellit der zweiten Gruppe von Satelliten einander auf derselben zweiten Bodenspur vorausgehen,
wobei das Verfahren, nach dem Herstellen der Intersatelliten-Verbindung zwischen dem ersten Satelliten der ersten Gruppe und dem ersten Satelliten der zweiten Gruppe, das Herstellen der Intersatelliten-Verbindung zwischen einem zweiten Satelliten der ersten Gruppe und einem zweiten Satelliten der zweiten Gruppe umfasst.

14. Verfahren nach Anspruch 13, umfassend, für die dritten und vierten Bodensegmentsysteme, die zum Herstellen einer Kommunikationsverbindung für eine sekundäre geografische Region konfiguriert sind, das Herstellen der Kommunikationsverbindung zwischen dem dritten Bodensegmentsystem, einem einzelnen Satelliten der ersten Gruppe von Satelliten und dem vierten Bodensegmentsystem,
und anschließendes Herstellen der Kommunikationsverbindung zwischen dem dritten Bodensegmentsystem, einem einzelnen Satelliten der zweiten Gruppe von Satelliten und dem vierten Bodensegmentsystem.

## Revendications

1. Un système par satellite (100) destiné à la fourniture d'une liaison de communications (214) pour une zone géographique définie (120), où la zone géographique est associée à une latence de réseau de communications donnée (130), le système comprenant :
un segment spatial (102) comprenant une pluralité de satellites, et
des premier et deuxième systèmes de segments au sol (104, 110), où les premier et deuxième systèmes de segments au sol sont disposés à des premier et deuxième emplacements respectifs, les premier et deuxième emplacements couvrant la zone géographique,
où le segment spatial et les premier et deuxième systèmes de segments au sol sont configurés de façon à établir une liaison de communications (106) entre les premier et deuxième systèmes de segments au sol par l'intermédiaire du segment spatial, la liaison de communications possédant une latence inférieure à la latence de réseau de communications donnée associée à la zone géographique,
où chaque satellite de la pluralité de satellites est dans une orbite de trace au sol répétitive (208),
où la pluralité de satellites se précèdent les uns les autres sur la même trace au sol,
et où la pluralité de satellites sont disposés dans des plans orbitaux séparés respectifs (208, 216, 408, 408').

2. Un système par satellite selon la Revendication 1, où chaque satellite de la pluralité de satellites est dans une orbite de trace au sol répétitive journalière héliosynchrone.

3. Un système par satellite selon l'une quelconque des Revendications précédentes, comprenant un troisième système de segments au sol et un quatrième système de segments au sol,
où le segment spatial et les troisième et quatrième systèmes de segments au sol sont configurés de façon à établir une liaison de communications pour une zone géographique secondaire entre les troisième et quatrième systèmes de segments au sol par l'intermédiaire du segment spatial,
et où les orbites de la pluralité de satellites sont agencées de sorte que les satellites, suite à un survol d'une première zone géographique sur la trace au sol, survolent la zone géographique secondaire sur la trace au sol de sorte qu'ils soient en vue des troisième et quatrième systèmes de segments au sol, et de sorte qu'un survol soit au cours d'une période donnée chaque jour.

4. Un système par satellite selon l'une quelconque des Revendications précédentes, où la pluralité de satellites comprend une pluralité de groupes de satellites, où les groupes de satellites sont disposés dans des plans orbitaux séparés respectifs,
et où des satellites d'un groupe de satellites donné sont disposés dans le même plan orbital.

5. Un système par satellite selon la Revendication 4, où un premier satellite d'un premier groupe de satellites et un premier satellite d'un deuxième groupe de satellites se précèdent l'un l'autre sur la même première trace au sol,
et où un deuxième satellite du premier groupe de satellites et un deuxième satellite du deuxième groupe de satellites se précèdent l'un l'autre sur la même deuxième trace au sol.

6. Un système par satellite selon la Revendication 4 ou 5, où au moins un groupe de satellites comprend au moins un satellite en redondance, conçu de façon à remplacer un des autres satellites du groupe.

7. Un système par satellite selon la Revendication 6, où le au moins un satellite en redondance est disposé dans le même plan orbital que les autres satellites du groupe, et précède au moins un satellite d'un autre groupe de satellites sur la même trace au sol ou une trace au sol similaire.

8. Un système par satellite selon l'une quelconque des Revendications précédentes, où la pluralité de satellites sont espacés de sorte qu'un transfert soit réalisable à un point auquel un satellite précédent et un satellite suivant sont à la même portée d'un système de segments au sol donné.

9. Un système par satellite selon l'une quelconque des Revendications précédentes, où la pluralité de satellites sont conçus de façon à fournir une liaison de communications inter-satellites (214, 416), et où le système est configuré de façon à établir une liaison de communications pour la zone géographique entre les systèmes de segments au sol par l'intermédiaire de la liaison de communications inter-satellites du segment spatial.

10. Un segment spatial (102) destiné à un système par satellite (100) selon l'une quelconque des Revendications précédentes, le segment spatial comprenant une pluralité de satellites, les satellites étant conçus de façon à communiquer avec au moins un système de segments au sol parmi le premier et le deuxième système de segments au sol (104, 110), et où chaque satellite de la pluralité de satellites est dans une orbite de trace au sol répétitive (208),
où la pluralité de satellites se précèdent les uns les autres sur la même trace au sol,
et où la pluralité de satellites sont disposés dans des plans orbitaux séparés respectifs (208, 216, 408, 408').

11. Un procédé de fourniture d'une liaison de communications (106) pour une zone géographique définie (120), où la zone géographique est associée à une latence de réseau de communications donnée (130), le procédé comprenant :
pour un segment spatial (102) comprenant une pluralité de satellites, la disposition de la pluralité de satellites dans des orbites de trace au sol répétitives (208), où la pluralité de satellites se précèdent les uns les autres sur la même trace au sol, et où la pluralité de satellites sont disposés dans des plans orbitaux séparés respectifs (208, 216, 408, 408'), et
l'établissement d'une liaison de communications (106) entre un premier système de segments au sol (104, 110) et le segment spatial, et entre le segment spatial et un deuxième système de segments au sol (104, 110), les premier et deuxième systèmes de segments au sol étant disposés à des premier et deuxième emplacements respectifs, les premier et deuxième emplacements couvrant la zone géographique, la liaison de communications possédant une latence inférieure à la latence de réseau de communications donnée associée à la zone géographique.

12. Un procédé selon la Revendication 11, la pluralité de satellites comprenant une pluralité de groupes de satellites, où les groupes de satellites sont disposés dans des plans orbitaux séparés respectifs, et où les satellites d'un groupe de satellites donné sont disposés dans le même plan orbital, et la pluralité de satellites étant conçus de façon à fournir une liaison de communications inter-satellites (214, 416),
le procédé comprenant l'établissement d'une liaison inter-satellites entre un premier satellite d'un premier groupe et un premier satellite d'un deuxième groupe, de façon à établir la liaison de communications pour la zone géographique entre les systèmes de segments au sol par l'intermédiaire de la liaison de communications inter-satellites du segment spatial.

13. Un procédé selon la Revendication 12, où un premier satellite d'un premier groupe de satellites et un premier satellite d'un deuxième groupe de satellites se précèdent l'un l'autre sur la même première trace au sol,
et où un deuxième satellite du premier groupe de satellites et un deuxième satellite du deuxième groupe de satellites se précèdent l'un l'autre sur la même deuxième trace au sol,
le procédé comprenant, suite à l'établissement de la liaison inter-satellites entre le premier satellite du premier groupe et le premier satellite du deuxième groupe, l'établissement de la liaison inter-satellites entre un deuxième satellite du premier groupe et un deuxième satellite du deuxième groupe.

14. Un procédé selon la Revendication 13, comprenant, pour des troisième et quatrième systèmes de segments au sol configurés de façon à établir une liaison de communications pour une zone géographique secondaire, l'établissement de la liaison de communications entre le troisième système de segments au sol, un satellite unique du premier groupe de satellites et le quatrième système de segments au sol,
et l'établissement subséquent de la liaison de communications entre le troisième système de segments au sol, un satellite unique du deuxième groupe de satellites et le quatrième système de segments au sol.
